# FASCICULE DE BREVET EUROPEEN

(11) **EP 2 572 409 B1**
(45) Date de publication et mention de la délivrance du brevet: **19.07.2017**
(21) Numéro de dépôt: 11727243.5
(22) Date de dépôt: 20.05.2011
(51) Int. Cl.: H01R 13/635, H01R 13/627, H01R 13/639, H01R 13/629, H01R 13/631, H01R 13/24, H01R 13/533, H01R 13/52

(54) **CONNECTEUR VERROUILLABLE**
VERRIEGELBARE STECKVERBINDER
LOCKABLE CONNECTOR

(30) Priorité: 20.05.2010 FR 1002133
(43) Date de publication de la demande: 27.03.2013
(73) Titulaire: THALES, 92200 Neuilly-sur-Seine (FR)
(72) Inventeur: RETAILLEAU, Xavier, F-49309 Cholet Cedex (FR); LETORTOREC, Christian, F-49309 Cholet Cedex (FR); DEFFOIS, Mathieu, F-49309 Cholet Cedex (FR); PELISSIER, Damien, F-49309 Cholet Cedex (FR); SAAIDY, Adam, F-91031 Evry Cedex (FR)
(74) Mandataire: Lavoix
(86) Numéro de dépôt international: PCT/FR2011/051148
(87) Numéro de publication internationale: WO 2011/144877

(56) Documents cités:
- FR-A1- 2 651 614
- FR-A1- 2 924 277
- US-A- 5 002 500
- US-A1- 2007 167 072

## Description

La présente invention concerne un ensemble de connexion du type comportant :
- une embase munie de broches de connexion ;
- une fiche munie de broches de connexion complémentaires et propre à être engagée sur l'embase ; et
- des moyens de verrouillage de la fiche par rapport à l'embase alors que les broches complémentaires sont en contact.

De nombreuses applications nécessitent de disposer de moyens de connexion permettant un verrouillage et un déverrouillage rapides. Tel est le cas par exemple pour la connexion d'organes auxiliaires tels qu'un clavier ou un joystick de commande dans un véhicule, par exemple un avion, un hélicoptère ou encore un véhicule terrestre. Les moyens de connexion doivent pouvoir être engagés ou désengagés par le pilote du véhicule alors que celui-ci assure d'autres fonctions de conduite, de sorte que ceux-ci doivent pouvoir être manoeuvrés d'une seule main. En outre, ces moyens de connexion doivent assurer une connexion fiable malgré les vibrations de l'environnement.

De tels connecteurs sont généralement qualifiés de connecteurs « push/pull ». Ces connecteurs sont classiquement de forme cylindrique et présentent un encombrement axial, correspondant au sens d'engagement, relativement important.

Il a été envisagé des connecteurs de forme rectangulaire avec des mécanismes de verrouillage latéraux.

Ce connecteur présente toutefois l'inconvénient d'être mal adapté aux environnements sévères (vent de sable, boue,) et de présenter des dimensions trop importantes. Les documents US 2007/167072 A1 et US 5 002 500 A divulguent les caractéristiques du préambule de la revendication indépendante 1. L'invention a pour but de proposer un ensemble de connexion qui soit d'une fiabilité accrue, de dimensions réduites tout en permettant d'être mis en oeuvre d'une seule main par un utilisateur.

A cet effet, l'invention a pour objet un ensemble de connexion du type précité tel que divulgué dans la revendication indépendante 1. Suivant des modes particuliers de réalisation, l'ensemble de connexion comporte les caractéristiques revendiquées dans les revendications dépendantes 2 et 3. L'invention a également pour objet une fiche de connexion munie de broches de connexion électriques et propre à être engagée sur une embase munie de broches de connexion électriques complémentaires, la fiche comportant un pêne de verrouillage de la fiche par rapport à l'embase alors que les broches complémentaire sont en contact, telle que divulguée dans le revendication 4. L'invention sera mieux comprise à la lecture de la description qui va suivre, donnée uniquement à titre d'exemple et faite en se référant aux dessins, sur lesquels :
- la figure 1 est une vue de côté de l'ensemble de connexion désengagé avec arrachement partiel ;

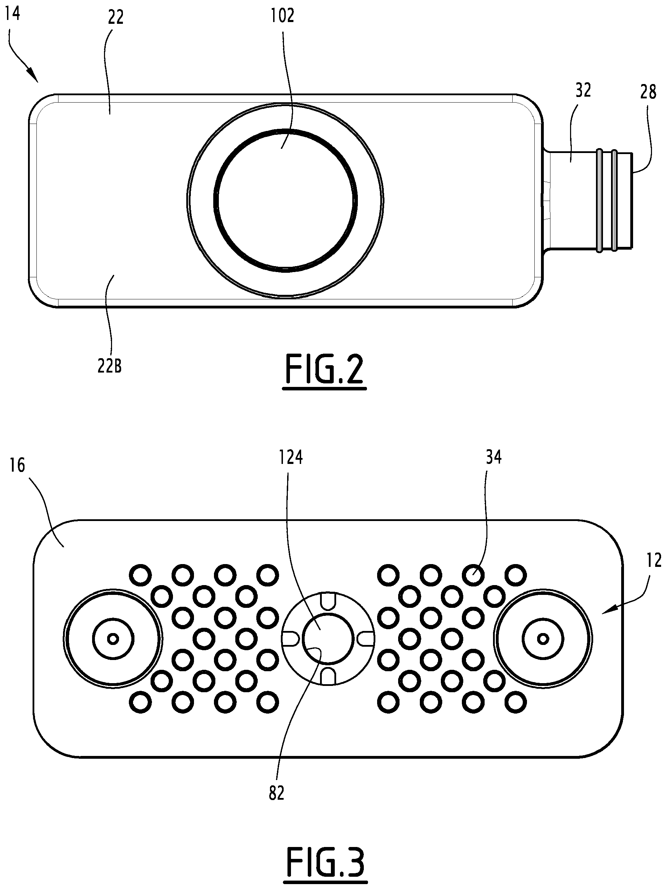

- la figure 2 est une vue de dessus de la fiche de connexion ; et
- la figure 3 est une vue de dessus de l'embase.

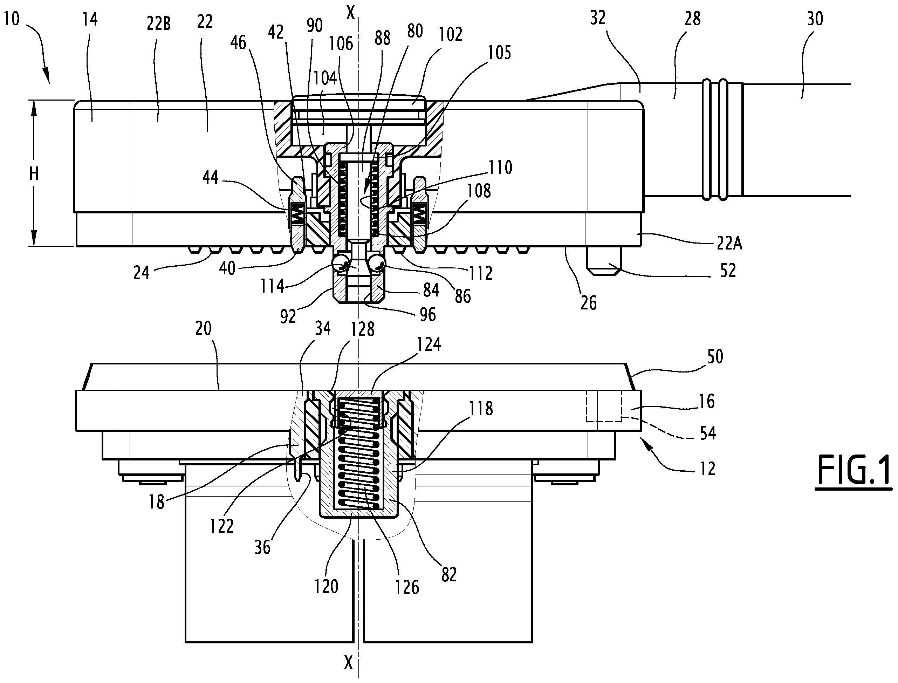

L'ensemble de connexion 10 illustré sur la figure 1 comporte une embase 12 et une fiche 14 propre à être engagée sur l'embase 12. L'embase comporte un socle 16 propre à être fixé, notamment par vissage ou rivetage, sur une paroi d'un boîtier. Le socle 16 supporte un ensemble de broches de connexion 18 suivant une face d'accouplement exposée 20 sur laquelle peut être rapportée la fiche 14.

La fiche 14 présente un boîtier 22 formé d'une base 22A et d'un capot 22B assemblés. Ce boitier 22 supporte un ensemble de broches de connexion 24, chacune correspondant aux broches de connexion 18. Les broches 24 émergent suivant une face d'accouplement 26 complémentaire à la face d'accouplement 20 de l'embase.

Le boîtier 22 présente latéralement un orifice 28 de passage de câble pour un câble électrique 30 renfermant des conducteurs indépendants chacun relié à une broche 24.

Avantageusement, le boîtier 22 présente la forme d'un parallélépipède rectangle, tel que la hauteur H, mesurée perpendiculairement à la face d'accouplement 26, c'est-à-dire suivant la direction X-X d'engagement de la fiche sur l'embase, soit réduite et plus précisément inférieure à la moitié et avantageusement au quart de la plus grande longueur de la face d'accouplement 26. Dans l'exemple considéré, la hauteur H est d'environ 15 mm.

Le passage 28 d'introduction du câble 30 s'étend dans la hauteur du boîtier 22, c'est-à-dire pour l'essentiel dans l'encombrement du boîtier 22. Dans le mode de réalisation représenté, le câble 30 pénètre au travers d'un manchon de guidage 32 prolongeant latéralement le boîtier 22 et s'ouvrant perpendiculairement à la direction X-X.

Les broches de connexion complémentaires 18 et 24 sont réparties suivant un réseau matriciel régulier sur la fiche et l'embase. Les broches sont réparties en deux groupes symétriques l'un de l'autre disposés de part et d'autre de l'axe médian de la fiche et de l'embase. Deux connecteurs coaxiaux sont en outre prévus aux extrémités de la fiche et de l'embase.

Les broches 18 sont chacune constituées d'un élément métallique fixé à demeure au socle 14, chaque broche présentant, suivant la face d'accouplement 20, une face d'appui pour une broche complémentaire 24 de la fiche et, à l'autre extrémité, une patte 36 de connexion d'un conducteur, par soudage notamment. Chaque broche de connexion 24 de la fiche est constituée d'un contact élastique à piston, c'est-à-dire que la broche comporte un pion métallique 40 monté mobile à coulissement dans une cage cylindrique 42 solidaire du boîtier 14 avec un ressort comprimé 44 interposé entre le fond de la cage 42 et une extrémité du pion 40. Ce ressort est propre à solliciter le pion 40 vers l'extérieur de la cage en direction du contact complémentaire 18 de l'embase. Le pion 40 est retenu par rapport à la cage 42 par un rétrain d'extrémité de la cage 42 pour éviter son dégagement complet de celle-ci.

La cage 42 comporte une patte 46 de connexion électrique à un conducteur du câble 30 ou à un circuit imprimé.

En variante, les contacts fixes sont portés par la fiche 14 alors que les contacts élastiques à piston sont portés par l'embase 12.

La face d'accouplement 20 du socle 14 est bordée par un joint élastique 50 propre à prendre appui sur la surface d'accouplement correspondante 26 de la fiche 14. Ce joint périphérique 50 entoure les broches de connexion et assure une étanchéité au connecteur. Il est en outre propre à exercer une force d'écartement entre l'embase 12 et la fiche 14.

Un pion de positionnement 52 est prévu sur l'un de la fiche 14 et de l'embase 12 et fait saillie par rapport à la face d'accouplement, un logement complémentaire 54 de réception du pion étant prévu en regard dans l'autre de la fiche et de l'embase.

Pour assurer le verrouillage fiable de la fiche par rapport à l'embase, la fiche 14 est équipée d'un organe de verrouillage 80 formant pêne propre à s'engager dans une gâche 82 ménagée dans le socle 16 de l'embase 12.

L'organe de verrouillage 80 est placé sensiblement au centre de la fiche 14 et est disposé entre les deux groupes de broches 24, répartissant ainsi ceux-ci de manière égale de part et d'autre.

L'organe de verrouillage comporte un fût 84, une couronne de billes 86 mobiles par rapport au fût dans lequel elles sont escamotées ou par rapport auquel elles font radialement saillie, une tige coulissante 88 d'immobilisation des billes 86 dans leur position en saillie et un ressort 90 de rappel de la tige dans sa position de retenue des billes en saillie.

Plus précisément, le fût 84 est généralement de forme cylindrique et présente une extrémité 92 formant téton faisant saillie par rapport à la surface de connexion 26. Le fût 84 est immobilisé par tout moyen adapté par rapport au boîtier 22. A cet effet, il est par exemple enserré entre la base 22A et le capot 22B formant le boîtier. Le fût 84 est reçu dans un perçage traversant de part en part le boîtier 22. Le fût 84 est traversé par un alésage 96 dans lequel la tige 88 est montée coulissante.

La tige 88 est déplaçable à coulissement dans l'alésage 96 perpendiculairement aux faces d'accouplement 20 et 26 suivant la direction d'engagement X-X.

Quatre ouvertures débouchant radialement relient la surface latérale du fût dans la région en saille à l'alésage 96. Ces ouvertures forment des logements dans chacun desquels est reçue une bille 86 mobile entre une position en saillie par rapport à la surface latérale du fût et une position escamotée partiellement dans l'épaisseur du fût et dans l'alésage 96. L'ouverture recevant les billes présente, à son extrémité s'ouvrant sur la surface externe du fût, une section inférieure à la section de la bille, évitant ainsi leur échappement.

La tige 88 se prolonge au-delà du fût 84 à l'opposé du téton 92. A cette extrémité, la tige est prolongée par un bouton 102 d'appui manuel permettant l'enfoncement de la tige dans le fût suivant la direction X-X. Un évidement 104 de réception du bouton 102 est ménagé dans le capot 22B du boîtier.

La tige 88 présente en avant du bouton 102 une collerette 105 formant butée propre à prendre appui sur un épaulement 106 ménagé à l'extrémité débouchante correspondante de l'alésage 96.

Le ressort 90 est comprimé entre cette collerette 105 et une surface d'appui 108 du fût, le ressort étant reçu dans un chambrage 110 ménagé à l'intérieur du fût. L'épaulement 106 propre à coopérer avec la collerette 105 forme une butée d'immobilisation du bouton 102 à l'encontre de l'action du ressort 90 dans une position de verrouillage de la fiche sur d'embase et de retenue des billes. Dans cette position, le bouton 102 affleure à la surface du boîtier 22 de la fiche.

A l'écart de son autre extrémité, la tige 88 présente un tronçon de section réduite 112 délimitée du coté opposé au bouton 102 par une surface de came tronconique 114 de sollicitation des billes 86 vers leur position de verrouillage en saillie.

La gâche 82 délimite un puits et est formée d'une douille cylindrique 118 rapportée sur le socle 16. Cette douille est de forme intérieure de révolution et présente un fond 120 opposé à son extrémité ouverte propre à recevoir le téton 92.

Sur sa surface intérieure, le puits 82 présente une gorge 122 de réception des billes 86 lorsque celles-ci sont dans leur position en saillie et que le téton est engagé dans la gâche.

Un bouchon escamotable 124 d'obturation du puits est monté mobile à coulissement à l'intérieur du passage délimité par la douille 82. Ce bouchon 124 est sollicité par un ressort 126 maintenu comprimé entre le fond 120 et le bouchon 124. Des butées 128 de retenue du bouchon 124 sont ménagées à l'extrémité du puits dans une position telle que, en l'absence de toute sollicitation, le bouchon 124 affleure à la face d'accouplement 20.

Le ressort 90 est tel que, alors que la tige 88 est déplacée pour libérer les billes 86, la force de rappel exercée par le ressort 90 sur la tige 88 est inférieure à la somme des forces d'écartement exercées entre la fiche et l'embase. Dans l'exemple considéré, ces forces d'écartement sont la somme de la force résultant du joint 50 et des forces individuelles produites par chaque contact élastique à piston 40.

Le connecteur fonctionne de la manière suivante.

Pour assurer la connexion, la fiche 14 est placée en regard de l'embase, avec l'extrémité du téton 92 placée à l'entrée du puits 82 et le pion 52 est placé en regard du logement 54. Une force d'appui exercée par l'opérateur sur la surface exposée du bouton 102 suivant la direction X-X provoque le rapprochement de la fiche 14 et de l'embase 12. L'appui sur la pièce 102 engendre un déplacement de la tige 88 qui libère les billes 86. Lorsque la fiche est en place et que la pression sur le bouton 102 est supprimée, les billes se verrouillent dans la gorge 122.

Lors de ce déplacement, les billes 86, en contact avec la surface latérale du puits 82, s'escamotent à l'intérieur du fût 84 en repoussant la tige 88 à l'encontre de l'action du ressort 90 par l'effet de came procuré par la surface 114.

Lorsque les billes 86 se trouvent en regard de la gorge 122, les billes, sous l'action du ressort 90 transmise par la tige 88 et la surface de came 114, se déplacent vers leur position de verrouillage en saillie en pénétrant à l'intérieur de la gorge 122.

La tige 88 est alors en position de verrouillage, interdisant un retour des billes 86 à l'intérieur du fût 84. Ainsi, la tige assure un verrouillage positif entre la fiche 14 et l'embase 12 par son action de retenue des billes en position.

Pour procéder au désaccouplement de la fiche 14 et de l'embase 12, l'opérateur exerce une pression sur le bouton 102, conduisant au déplacement de la tige 88 suivant la direction X-X, de sorte que les billes 86 se trouvent en regard du logement délimité par la section 112 de diamètre réduit de la tige. Les billes 86 sont alors libres de se déplacer vers leur position escamotée à l'intérieur du fût.

Sous l'action des forces combinées des contacts élastiques à piston 40 et du joint 50, la fiche 14 s'écarte de l'embase 12 sans qu'il soit nécessaire que l'opérateur n'intervienne ou ne relâche sa pression sur la tige 88. Les billes 86 s'escamotent alors à l'intérieur du fût 84 pour permettre la sortie du téton 92 du puits 82.

Lors de l'écartement de la fiche 14 et de l'embase 12, le ressort 90 se comprime davantage, ce qui est possible compte tenu de la force réduite exercée par le ressort 90, celle-ci étant sur toute la course de compression inférieure aux forces d'écartement entre la fiche 14 et l'embase 12.

## Revendications

1. Ensemble de connexion (10) comportant :
- une embase (12) munie de broches de connexion (18) ;
- une fiche (14) munie de broches de connexion complémentaires (24) et propre à être engagée sur l'embase (12) et
- des moyens (82) de verrouillage de la fiche (14) par rapport à l'embase (12) alors que les broches complémentaires (18, 24) sont en contact ; comportant
un pêne (80) solidaire de l'un de la fiche (14) et de l'embase (12), lequel pêne (80) comporte un fût (84) pourvu de billes (86) mobiles entre une position de verrouillage en saillie par rapport au fût (84) et une position escamotée dans le fût (84) et d'une tige (88) de retenue des billes dans leur position de verrouillage, laquelle tige (88) est mobile par rapport au fût (84) entre une position de libération des billes (86) et une position de retenue des billes (86) dans leur position de verrouillage en saillie, un puits (82) ménagé dans l'autre de la fiche (14) et de l'embase (12), lequel puits (82) est propre à recevoir au moins partiellement le pêne (80) et présente une gorge (122) de réception des billes (86) dans leur position de verrouillage en saillie, et il comporte un ressort (90) de rappel de la tige (88) vers sa position de retenue de billes, et la tige (88) présente une surface de came (114) propre à repousser les billes (86) vers leur position de verrouillage lorsque le ressort (90) sollicite la tige (88) vers sa position de retenue,
**caractérisé en ce que** chaque broche de connexion (24) de la fiche (14) est constituée d'un contact élastique à piston (40),
et **en ce que** la fiche (14) comporte
- un joint d'étanchéité (50) entourant les broches complémentaires (18, 24) enserré entre l'embase (12) et la fiche (14) lorsqu'elles sont accouplées,
et dans lequel les contacts élastiques à piston (40) et le joint d'étanchéité (50) exercent ensemble une force d'écartement entre la fiche (14) et l'embase (12),
le ressort (90) est tel que, alors que la tige (88) est déplacée pour libérer les billes (86), la force de rappel exercée par le ressort (90) est inférieure à ladite force d'écartement exercée entre la fiche (14) et l'embase (12) par les contacts élastiques à piston (40) et le joint d'étanchéité (50).

2. Ensemble de connexion (10) selon la revendication 1, **caractérisé en ce que** les moyens de verrouillage comportent un unique pêne et un unique puits, chacun disposé au centre de l'ensemble des broches de la fiche (14) et de l'embase (12).

3. Ensemble de connexion (10) selon l'une quelconque des revendications précédentes, **caractérisé en ce que** les broches de connexion (18, 24) de l'un de l'embase (12) et de la fiche (14) sont des contacts élastiques à piston.

4. Fiche de connexion (14), pour un ensemble de connexion selon l'une quelconque des revendications 1 à 3, munie de broches de connexion électriques (24), et propre à être engagée sur une embase (12) munie de broches de connexion électriques complémentaires (18), la fiche comportant un pêne (80) de verrouillage de la fiche (14) par rapport à l'embase (12) alors que les broches complémentaires (18, 24) sont en contact, dans laquelle le pêne (80) comporte un fût (84) pourvu de billes (86) mobiles entre une position de verrouillage en saillie par rapport au fût (84) et une position escamotée dans le fût (84) et d'une tige (88) de retenue des billes dans leur position de verrouillage en saillie, laquelle tige est mobile par rapport au fût (84) entre une position de libération des billes (86) et une position de retenue des billes (86) dans leur position de verrouillage en saillie, et elle comporte un ressort (90) de rappel de la tige (88) vers sa position de retenue de billes, et la tige (88) présente une surface de came (114) propre à repousser les billes (86) vers leur position de verrouillage lorsque le ressort (90) sollicite la tige (88) vers sa position de retenue, **caractérisée en ce que** lesdites broches de connexion électriques (24) sont constituées d'un contact élastique à piston (40), et **en ce que** la fiche (14) est munie d'un joint d'étanchéité (50) configuré pour être enserré entre l'embase (12) et la fiche (14) lorsqu'elles sont accouplées, et **en ce que** les contacts élastiques à piston (40) et le joint d'étanchéité (50) sont configurés pour exercer ensemble une force d'écartement entre la fiche (14) et l'embase (12), le ressort (90) est tel que, alors que la tige (88) est déplacée pour libérer les billes (86), la force de rappel exercée par le ressort (90) est inférieure à ladite force d'écartement exercée entre la fiche (14) et l'embase (12) par les contacts élastiques à piston (40) et le joint d'étanchéité (50).

## Patentansprüche

1. Verbindungsvorrichtung (10), aufweisend:
- eine Buchse (12), die mit Verbindungsstiften (18) versehen ist,
- einen Stecker (14), der mit komplementären Verbindungsstiften (24) ausgestattet ist und der in der Lage ist mit der Buchse (12) im Eingriff zu stehen, und
- Mittel (82) zur Verriegelung des Steckers (14) bezüglich der Buchse (12) während die komplementären Stifte (18, 24) im Kontakt sind, aufweisend
einen Riegel (80), der mit einem von dem Stecker (14) und der Buchse (12) fest verbunden ist, wobei der Riegel (80) ausgestattet ist mit einem Schaft (84), der mit Kügelchen (86) versehen ist, die zwischen einer Verriegelungsposition bezüglich des Schafts (84) vorstehend und einer Position des Eingerückt-Seins in den Schaft (84) bewegbar sind, und mit einem Stift (88) zum Aufrechterhalten der Kügelchen (86) in deren Verriegelungsposition, wobei der Stift (88) bewegbar ist bezüglich des Schafts (84) zwischen einer Position zur Freigabe der Kügelchen (86) und einer Position der Aufrechterhaltung der Kügelchen (86) in deren Vorspring-Verriegelungsposition, und eine Ausnehmung (82), die in dem anderen von dem Stecker (14) und der Buchse (12) bereitgestellt ist, wobei die Ausnehmung (82) in der Lage ist, den Riegel (80) wenigstens teilweise aufzunehmen, und eine Hohlkehle (122) aufweist zur Aufnahme der Kügelchen (86) in deren Vorspring-Verriegelungsposition, und wobei er aufweist eine Feder (90) zur Rückstellung des Stifts (88) zu dessen Position zum Aufrechterhalten der Kügelchen hin, wobei der Stift (88) eine Steuerfläche (114) hat, die in der Lage ist, die Kügelchen (86) zu deren Verriegelungsposition hin zu drücken, wenn die Feder (90) den Stift (88) zu dessen Aufrechterhaltungs-Position hin zwingt,
**dadurch gekennzeichnet, dass** jeder Verbindungsstift (24) des Steckers (14) von einem elastischen Kolben-Kontakt (40) gebildet ist, und
und dass der Stecker (14) aufweist
- einen Dichtungsring (50), der die komplementären Stifte (18, 24) umgibt und der zwischen dem Stecker (12) und der Buchse (14) eingespannt ist, wenn diese miteinander gekuppelt sind,
und wobei die elastischen Kolben-Kontakte (40) und der Dichtungsring (50) gemeinsam eine Distanzierungskraft zwischen dem Stecker (14) und der Buchse (12) ausüben,
wobei die Feder (90) derart ist, dass, sogar wenn der Stift (88) deplatziert ist zum Freigeben der Kügelchen (86), die Rückstellkraft, die von der Feder (90) ausgeübt wird, kleiner ist als die besagte Distanzierungskraft, die von den elastischen Kolben-Kontakten (40) und dem Dichtungsring (50) zwischen dem Stecker (14) und der Buchse (12) ausgeübt wird.

2. Verbindungsvorrichtung (10) gemäß Anspruch 1, **dadurch gekennzeichnet, dass** die Verriegelungs-Mittel einen einzigen Riegel und eine einzige Ausnehmung aufweisen, von denen jeder in der Mitte der Gruppe von Stiften des Steckers (14) und der Buchse (12) angeordnet ist.

3. Verbindungsvorrichtung (10) gemäß irgendeinem der vorhergehenden Ansprüche, **dadurch gekennzeichnet, dass** die Verbindungsstifte (18, 24) von einem von der Buchse (12) und dem Stecker (14) elastische Kolben-Kontakte sind.

4. Verbindungsstecker (14) für eine Verbindungsvorrichtung gemäß irgendeinem der Ansprüche 1 bis 3, der ausgestattet ist mit elektrischen Verbindungsstiften (24) und der in der Lage ist, mit einer Buchse (12) im Eingriff zu stehen, die mit komplementären elektrischen Verbindungsstiften (18) ausgestattet ist,
wobei der Stecker aufweist einen Riegel (80) zur Verriegelung des Steckers (14) bezüglich der Buchse (12) während die komplementären Stifte (18, 24) im Kontakt stehen, wobei der Riegel (80) aufweist einen Schaft (84), der versehen ist mit Kügelchen (86), die zwischen einer Verriegelungsposition bezüglich des Schafts (84) vorstehend und einer Position des Eingerückt-Seins in den Schaft (84) bewegbar sind, und mit einem Stift (88) zum Aufrechterhalten der Kügelchen in deren Vorspring-Verriegelungsposition, wobei der Stift bewegbar ist bezüglich des Schafts (84) zwischen einer Position zur Freigabe der Kügelchen (86) und einer Position der Aufrechterhaltung der Kügelchen (86) in deren Vorspring-Verriegelungsposition, und wobei er aufweist eine Feder (90) zur Rückstellung des Stifts (88) zu dessen Position zum Aufrechterhalten der Kügelchen hin, wobei der Stift (88) eine Steuerfläche (114) hat, die in der Lage ist, die Kügelchen (86) zu deren Verriegelungsposition hin zu drücken, wenn die Feder (90) den Stift (88) zu dessen Aufrechterhaltungs-Position hin zwingt, **dadurch gekennzeichnet, dass** die besagten elektrischen Verbindungsstifte (24) von einem elastischen Kolben-Kontakt (40) gebildet sind und
und dass der Stecker (14) mit einem Dichtungsring (50) versehen ist, der konfiguriert ist, um zwischen dem Stecker (12) und der Buchse (14) eingespannt zu sein, wenn diese miteinander gekuppelt sind,
und dass die elastischen Kolben-Kontakte (40) und der Dichtungsring (50) konfiguriert sind, um gemeinsam eine Distanzierungskraft zwischen dem Stecker (14) und der Buchse (12) auszuüben, wobei die Feder (90) derart ist, dass, sogar wenn der Stift (88) deplatziert ist zum Freigeben der Kügelchen (86), die Rückstellkraft, die von der Feder (90) ausgeübt wird, kleiner ist als die besagte Distanzierungskraft, die von den elastischen Kolben-Kontakten (40) und dem Dichtungsring (50) zwischen dem Stecker (14) und der Buchse (12) ausgeübt wird.

## Claims

1. A connection assembly (10) which comprises:
- a socket (12) provided with connection pins (18);
- a plug (14) provided with matching connection pins (24) and suitable for being inserted on the socket (12);
- a means (82) for locking the plug (14) relative to the socket (12) while the matching pins (18, 24) are engaged; comprising:
a bolt (80) secured either to the plug (14) or the socket (12), said bolt (80) comprising a barrel (84) provided with balls (86) movable between a locking position projecting in relation to the barrel (84) and a position retracted inside the barrel (84), and a rod (88) for retaining the balls in the locking position thereof, said rod (88) being movable relative to the barrel (84) between a position in which the balls (86) are released and a position in which the balls (86) are retained in the locked and projecting position thereof, a shaft (82) arranged in the other one of the plug (14) or the socket (12), said shaft (82) being suitable for at least partially receiving the bolt (80) and having a groove (122) for receiving the balls (86) in the locked and projecting position thereof, and it comprises a spring (90) for returning the rod (88) toward the ball-retaining position thereof, and the rod (88) has a cam surface (114) suitable for pushing the balls (86) back into the locked position thereof when the spring (90) urges the rod (88) towards the retaining position thereof,
**characterized in that** each connection pin (24) of the plug (14) is constituted by an elastic piston contact (40),
and **in that** the plug (14) comprises
- a sealing ring (50) surrounding the complementary pins (18, 24) gripped between the socket (12) and the plug (14) when they are coupled,
and in which the elastic piston contacts (40) and the sealing ring (50) apply combined a separating force between the plug (14) and the socket (12),
the spring (90) is such that, when the rod (88) is moved in order to release the balls (86), the return force exerted by the spring (90) is less than the said separating force exerted between the plug (14) and the socket (12) by the elastic piston contacts (40) and the sealing ring (50).

2. The connection assembly (10) according to claim 1, **characterized in that** the locking means comprise a single bolt and a single shaft, each positioned at the center of the assembly of the pins of the plug (14) and the socket (12).

3. The connection assembly (10) according to any one of the preceding claims, **characterized in that** the connection pins (18, 24) of one of the socket (12) and the plug (14) are elastic piston contacts.

4. A connection plug (14), for a connection assembly according to any one of claims 1 to 3, provided with electrical connecting pins (24) and capable of being engaged on a socket (12) provided with complementary electric connection pins (18), the plug comprising a bolt (80) for locking the plug (14) relative to the socket (12) when the complementary pins (18, 24) are in contact, wherein the bolt (80) comprises a barrel (84) provided with balls (86) movable between a locking position in which said balls are projecting in relation to the barrel (84) and a position in which said balls are retracted inside the barrel (84), and a rod (88) for retaining the balls in the projecting locking position thereof, said rod being movable relative to the bolt (80) between a position in which the balls (86) are released and a position in which the balls (86) are retained in the locked and projecting position thereof, and it comprises a spring (90) for returning the rod (88) toward the ball-retaining position thereof, and the rod (88) has a cam surface (114) suitable for pushing the balls (86) back into the locked position thereof when the spring (90) urges the rod (88) towards the retaining position thereof, **characterized in that** said connection pin (24) of the plug (14) are constituted by an elastic piston contact (40),
and **in that** the plug (14) comprises a sealing ring (50) configured for being gripped between the socket (12) and the plug (14) when they are coupled,
and **in that** the elastic piston contacts (40) and the sealing ring (50) are configured for applying combined a separating force between the plug (14) and the socket (12),
the spring (90) is such that, when the rod (88) is moved in order to release the balls (86), the return force exerted by the spring (90) is less than said separating force exerted between the plug (14) and the socket (12) by the elastic piston contacts (40) and the sealing ring (50).
